# EUROPEAN PATENT APPLICATION

(11) **EP 2 775 002 A1**
(43) Date of publication of application: **10.09.2014**
(21) Application number: 14158585.1
(22) Date of filing: 10.03.2014
(51) Int. Cl.: C21D 5/00, C21C 1/10, C22C 33/08, C22C 33/10, C22C 37/04, C22C 37/10, F16D 13/64, F16D 13/68

(54) **Spline hub for clutch and manufacturing method thereof**

(30) Priority: 08.03.2013 KR 20130025246
(71) Applicant: LG Electronics, Inc., Seoul 150-721 (KR)
(72) Inventor: Park, Jaebong, Seoul 153-802 (KR)
(74) Representative: Vossius & Partner

(57) **Abstract**

A spline hub for a clutch and a manufacturing method thereof are provided. The spline hub includes C : 3.4 ∼ 3.9%, Si : 2.1 ∼ 2.5%, Mn : 0.2 ∼ 0.7%, P : 0.01 % or less, S : 0.009 ∼ 0.02%, Cu : 0.2 ∼ 0.4%, and Mg: 0.04 ∼ 0.07% by weight ratio, and iron (Fe) and any inevitable impurity comprising the remainder, and has a structure in which spheroidal graphite is precipitated in an austenite matrix structure.

## Description

The present disclosure relates to a spline hub for a clutch and a manufacturing method thereof, and more particularly, to a spline hub constituting a clutch used in a transmission of a vehicle, and a manufacturing method thereof.

In general, a clutch is a mechanical element connecting a driving shaft and a driven shaft to transmit power, and in terms of characteristics, a clutch is required to have smooth gear shifting and fast and high power transmission response characteristics. Clutches are utilized in various industrial fields such as automobiles, motorcycles, industrial machinery, press, ships, and the like.

A clutch has a structure of transmitting rotary power through frictional force between a driving gear and a driven gear, and includes a clutch disk generating frictional force and a spline hub connected to the clutch disk to transmit power to a driving shaft of a wheel.

The spline hub is required to have abrasion resistance, rigidity, and fatigue resistance. An existing spline hub is manufactured by melting elements such as carbon (C), molybdenum (Mo), copper (Cu), chromium (Cr), manganese (Mn), silicon (Si), and the like, together with iron to make and obtain carbon steel, and forging, processing, and carburizing, and surface-processing the carbon steel. However, since the spline hub is manufactured through multiple processes, manufacturing costs are increased due to the multiple processes and a degradation of material yield.

Therefore, an aspect of the detailed description is to provide a spline hub which may be easily manufactured at low costs, compared to the related art.

Another aspect of the detailed description is to provide a method for manufacturing the above spline hub.

To achieve these and other advantages and in accordance with the purpose of this specification, as embodied and broadly described herein, a spline hub for a clutch may include C : 3.4 - 3.9%, Si : 2.1 - 2.5%, Mn : 0.2 - 0.7%, P : 0.01% or less, S : 0.009 - 0.02%, and Cu : 0.2 - 0.4%, and Mn: 0.04 - 0.07% by weight ratio, and the remainder being iron (Fe) and unavoidable impurities , and have a structure in which spheroidal graphite is precipitated in an austenite matrix structure.

In the aspect of the present disclosure, since the spline hub is manufactured by using nodular graphite cast iron having the foregoing components and structure, the splint hub may have sufficient strength and abrasion resistance, while reducing a manufacturing cost and time, compared to the related art forging. Accordingly, the spline hub may be easily manufactured at low costs.

Here, the components may be adjusted to fall within the above range by using scrap, pig iron, steel waste, and the like. Scrap refers to fragments, or the like, produced during machining, and steel waste refers to steel discarded after being used. Since scrap and steel waste are low in price and easily obtained, manufacturing costs may be further reduced.

Meanwhile, the structure may include acicular ferrite structure.

To achieve these and other advantages and in accordance with the purpose of this specification, as embodied and broadly described herein, a method for manufacturing a spline hub for a clutch may include: mixing raw materials including C : 3.4 - 4.0%, Si : 1.5 - 1.9%, Mn : 0.5% or less, P : 0.05% or less, S : 0.009 - 0.02%, and Cu : 0.2 - 0.4% by weight ratio and iron (Fe) comprising the remainder and smelting the crude liquid molten metal; applying a nodularizer and an inoculant to the smelted crude liquid molten metal to prepare a molten metal; a casting operation of injecting the molten metal into a mold to obtain a hub semi-product; machining the hub semi-product to have a predetermined shape; and isothermally hardening the machined hub semi-product.

Here, in the operation of smelting the crude liquid molten metal, the crude liquid molten metal may be taken out at a temperature of 1490 - 1530°C.

Also, a rare earth source silicon iron magnesium alloy (FeSiMg6RE1) may be applied as the nodularizer in an amount of 1.0 - 1.1 % of the mass of the crude liquid molten metal.

The isothermally hardening may include: heating the hub semi-product to reach a temperature of 890 - 930°C and maintaining the heated hub semi-product for 1.5 - 2.5 hours; putting the hub semi-product into a liquid having a temperature of 340 - 360°C and maintaining the hub semi-product in the liquid for 1 - 2 hours; and cooling the hub semi-product to reach room temperature in the air.

The liquid may be a nitrate solution generated by mixing KNO₃ and NaNO₃ in a mass ratio of 1:1.

Components of the molten metal with the nodularizer and the inoculant injected therein may comprise C : 3.4 - 3.9%, Si : 2.1 - 2.5%, Mn : 0.2 - 0.7%, P : 0.01% or less, S : 0.05% or less, Cu : 0.2 - 0.4%, and Mg : 0.04 - 0.07% by weight ratio, and Fe comprising the remainder.

The method may further include: grinding the hardened hub semi-product to have a final shape.

In the aspect of the present disclosure, since a spline hub having the foregoing characteristics is manufactured by using nodular graphite cast iron, a manufacturing process and time may be shortened, while the spline hub has sufficient strength and abrasion resistance, compared to the conventional forging. Thus, the spline hub may be easily manufactured at low costs.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

The accompanying drawings, which are included to provide a further understanding of the invention and are incorporated in and constitute a part of this specification, illustrate exemplary embodiments and together with the description serve to explain the principles of the invention.

In the drawings:

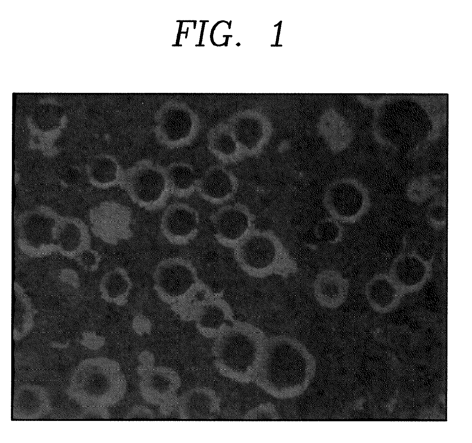

FIG. 1 is a photograph illustrating an internal structure of a spline hub according to an exemplary embodiment of the present disclosure.

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, a spline hub according to an exemplary embodiment of the present disclosure will be described in detail with reference to the accompanying drawings. Here, the present disclosure is directed to materials of a spline hub, rather than being related to a configuration thereof, and thus, the present disclosure is not limited to a configuration.

In general, cast iron has high hardness and excellent abrasion resistance and machinability but has low tensile strength and strong brittleness, so cast iron is rarely used as a material of a member exposed to a high pressure atmosphere. In particular, in case of the spline hub for a clutch as described above, abrasion resistance, impact resistance, and fatigue resistance as described above are required in terms of an operation principle thereof. In order to overcome shortcomings of cast iron, in the present exemplary embodiment, a nodular graphite cast iron having an austenite structure obtained by precipitating spheroidal graphite is utilized as a material of a hub.

Hereinafter, each element for manufacturing nodular graphite cast iron will be described. Unless otherwise mentioned, each content is expressed by a weight ratio.

### (1) Carbon (C) : 3.4∼4.0%

As a raw material of nodular graphite cast iron used to manufacture a spline hub according to an exemplary embodiment of the present disclosure, the content of carbon (C) may be 3.4 - 4.0% by weight ratio. Also, the content of carbon (C) may be 3.5 - 4.0%. Also, the content of carbon (C) may be 3.4 - 3.9%. Also, the content of carbon (C) may be 3.6 - 3.8%.

In cast iron, carbon (C) may exist as graphite or in the form of carbide represented by Fe3C. Thus, in a case in which the content of carbon is small, since most carbon exists in the form of carbide, a spheroidal graphite structure rarely appears, so carbon (C) is added by an amount equal to or more than 3.4% to obtain an entirely uniform flake graphite structure. Meanwhile, as the content of carbon (C) is higher, a freezing point is lowered, assisting to improve castability, but a deposition amount of graphite is too excessive to increase brittleness and negatively affect tensile strength. Namely, the highest tensile strength may be obtained when carbon saturation (Sc) ranges approximately from 0.8 to 0.9, and thus, a maximum limitation of the content of carbon (C) may be set to 4.0% to obtain good tensile strength.

### (2) Silicon (Si) : 1.5∼1.9%

As a raw material of nodular graphite cast iron used to manufacture a spline hub according to an exemplary embodiment of the present disclosure, the content of silicon (Si) may be 1.5 - 1.9% by weight ratio. Also, the content of silicon (Si) may be 1.6 ∼ 1.9%. Also, the content of silicon (Si) may be 1.8 ∼ 1.9%. Also, the content of silicon (Si) may be 1.6 - 1.8%.

Silicon (Si), a graphitizer, serves to decompose a carbide to precipitate graphite. Namely, addition of silicon (Si) provides an effect of increasing an amount of carbon. In addition, silicon (Si) serves to allow a micro-graphite structure existing in cast iron to grow as a flake graphite structure. The grown flake graphite structure is generated as spheroidal graphite by magnesium, a nodularizer, or the like. In particular, mechanical performance of a bainite matrix structure is increased according to an increase in the content of silicon. Namely, addition of a large amount of silicon (Si) serves to strengthen the bainite matrix structure to enhance tensile strength, and this is more conspicuous when the content of silicon is 3.0% or less. This is because, as the content of silicon is increased, a diameter of graphite is reduced and an amount of ferrite is increased to accelerate bainite transformation. The ferrite may include an acicular ferrite structure.

Namely, when Si/C is increased, an amount of graphite is reduced and tensile strength may be enhance by an effect of strengthening the matrix structure due to high silicon. This may be remarkable when inoculation is performed on a molten metal.

However, if the content of silicon exceeds 3.0%, such an effect is saturated. In addition, if the content of silicon is too high, the content of carbide is reduced to lower hardness and abrasion resistance, make it difficult for a material to be melted, and transform an austenite structure into a martensite structure during a follow-up cooling process to result in an increase in brittleness. In addition, as the content of silicon is increased, heat conductivity is lowered to make a temperature distribution non-uniform during cooling or heating to increase residual stress. Thus, the content of silicon is determined as 1.5 - 1.9%.

### (3) Manganese (Mn): 0.5% or less

As a raw material of nodular graphite cast iron used to manufacture a spline hub according to an exemplary embodiment of the present disclosure, the content of manganese (Mn) may be 0.5% or less by weight ratio. Also, the content of manganese (Mn) may be 0.001 - 0.5%. Also, the content of manganese (Mn) may be 0.4% or less. Also, the content of manganese (Mn) may be 0.35% or less.. Also, the content of manganese (Mn) may be 0.001 - 0.35%.. Also, the content of manganese (Mn) may be 0.3% or less.. Also, the content of manganese (Mn) may be 0.2 - 0.4%.

Manganese (Mn), a white cast iron acceleration element hampering graphitizing of carbon, stabilizes combined carbon (namely, cementite). Also, manganese (Mn) hinders precipitation of ferrite and refine pearlite, so it is advantageous to make a matrix structure of cast iron pearlite. In particular, manganese (Mn) is combined with sulfur of cast iron to create manganese sulfide. Manganese sulfide floats to a surface of a molten metal so as to be removed as slag, or may remain in cast iron as a non-metallic inclusion to prevent generation of iron sulfide. Namely, manganese (Mn) acts as an element neutralizing harm of sulfur. In order to accelerate pearlite and remove a sulfur component, manganese (Mn) is contained in an amount of 0.5% or less.

### (4) Phosphor (P): 0.05% or less

As a raw material of nodular graphite cast iron used to manufacture a spline hub according to an exemplary embodiment of the present disclosure, the content of phosphor (P) may be 0.05% or less by weight ratio. Also, the content of phosphor (P) may be 0.007 - 0.05%. Also, the content of phosphor (P) may be 0.009 - 0.05%. Also, the content of phosphor (P) may be 0.007 - 0.01 %.

Phosphor (P) forms a compound of iron phosphide (Fe3P) and exists as a ternary eutectic steadite together with an iron carbide. The iron phosphide may be easily undercooled and easily cause segregation in casting. Thus, as the content of phosphor (P) is increased, brittleness is increased and tensile strength is rapidly degraded. Thus, the content of phosphor (P) is determined to be 0.05% or less.

### (5) Sulfur (S): 0.009 - 0.02%

As a raw material of nodular graphite cast iron used to manufacture a spline hub according to an exemplary embodiment of the present disclosure, the content of sulfur (S) may be 00.009 - 0.02% by weight ratio. Also, the content of sulfur (S) may be 0.01 - 0.02%.

Addition of a large amount of sulfur (S) degrades fluidity of a molten metal, increase shrinkage, and causes a shrinkage cavity or cracks. Thus, preferably, sulfur (S) is contained as small as possible. Thus, sulfur (S) is managed to be within the content.

### (6) Copper (Cu) : 0.2∼0.4%

As a raw material of nodular graphite cast iron used to manufacture a spline hub according to an exemplary embodiment of the present disclosure, the content of copper (Cu) may be 0.2 - 0.4% by weight ratio. Also, the content of copper (Cu) may be 0.25 - 0.4%. Also, the content of copper (Cu) may be 0.3 - 0.4%.

Copper (Cu) is an element thickening and shortening a shape of graphite, reducing D and E-type undercooled graphite, and accelerating A-type flake graphite. Also, copper (Cu) plays an excellent role to improve a form of graphite, hampers graphitizing and reduces chilled tendency during a eutectoiding process. In addition, copper (Cu) improves a distribution of carbide, forms pearlite, and sub-divides the structure.

In addition, while accelerating formation of pearlite, copper (Cu) reduces a distance between pearlites to subdivide the pearlite. Also, copper (Cu) increases fluidity of a molten metal, enhancing castability and thus lowering residual stress. In addition, copper (Cu) densifies the structure and slightly enhances tensile strength, hardness, or the like, of cast iron. To this end, copper is added by the foregoing content.

### (7) Pig iron

As a raw material of nodular graphite cast iron used to manufacture a spline hub according to an exemplary embodiment of the present disclosure, pig iron may be used. Pig iron, a type of iron immediately produced from iron ore, contains impurities such as sulfur, phosphor, and the like, besides carbon (C). Due to brittleness, pig iron may not be rolled or forged. However, since pig iron has a low melting point, pig iron may be appropriate to be utilized as a raw material of casting.

Meanwhile, scraps, namely, fragments or the like, produced while steel is machined has characteristics identical to those of the base material. In addition, steel wastes remaining after steel is utilized in construction sites or various structures and ends its life retain ductility and toughness of the original steel. Thus, steel wastes may be mixed with pig iron during a casing process to improve characteristics of pig iron.

Hereinafter, a manufacturing process for manufacturing a hub according to an exemplary embodiment of the present disclosure will be described.

### (1) Smelting

The foregoing elements The foregoing elements are selected in appropriate ratios to prepare a raw material, and the raw material is put into a middle frequency induction furnace and heated to be melted, and subsequently smelted. At this time, the crude liquid molten metal is taken out at a temperature ranging from approximately 1490°C to 1530°C.

### (2) Spheroidization and inoculation

A nodularizer for nodularizing graphite and an inoculant are inoculated to the crude liquid molten metal smelted in the smelting process. In this case, magnesium (Mg), calcium (Ca), and rare earth resources (RE), known to accelerate nodularization of graphite, may be used as the nodularizer. In detail, a nodularizer having components such as Mg : 5.5-6.5%, Si : 44-48%, Ca : 0.5-2.5%, AL<1.5%, RE : 0.8-1.5%, MgO<0.7% may be used. For example, FeSiMg6RE1 may be added in an amount of 1.0 ∼ 1.1 % of the mass of the crude liquid molten metal.

Meanwhile, inoculation generates a large amount of graphite nucleus to accelerate graphitizing, and makes a distribution of graphite uniform, and helps to increase strength. As an inoculant, a barium silicon iron alloy (FeSi72Ba2) may be used and the content of inoculant is 0.1 - 0.2% of the mass of the crude liquid molten metal.

When the spheroidization and inoculation are performed, components in the molten metal include C : 3.4 - 3.9%, Si : 2.1 - 2.5%, Mn : 0.2 - 0.7%, P : 0.1 % or less, S : 0.05% or less, Cu : 0.2 - 0.4%, and Mg : 0.04 - 0.07% by weight ratio, and Fe comprising the remainder.

### (3) Casting

The inoculated molten metal is injected into a mold manufactured in advance to have a cavity having a desired shape. Here, casting is performed by using a green sand mold, and a temperature of the molten metal during the injection process is controlled to range from 1390 - 1420°C. The molten metal after spheroidization should be injected into a mold within 10 minutes. When the molten metal injected into the mold is cooled, a hub formed of globular cast iron containing spheroidal graphite, ferrite, and pearlite is obtained.

### (4) Machining

The hub semi-product obtained in the casting process is first cleaned to remove sand and an oxide layer attached to a surface thereof, and machined to have an intended shape.

### (5) Isothermal hardening

Isothermal hardening (heat treatment process) is performed on the machined hub semi-product. Isothermal hardening is performed to austenitize the matrix structure. In detail, the machined hub semi-product having a pearlite matrix structure is heated by using an electrical resistance furnace capable of controlling an air temperature to reach 890 - 930°C, maintained for 1.5 to 2.5 hours, and put into a nitrate solution having a temperature ranging from 340 - 360°C and maintained for 1 - 2 hours, taken out, and cooled to reach room temperature in the air. Through this heat treatment, the pearlite matrix of the hub semi-product may be transformed into an austenite matrix structure, and thus, toughness and impact resistance may be significantly enhanced.

Here, a solution in which KNO₃ and NaNO₃ are mixed in the weight ratio of 1:1 may be used as the nitrate solution. Here, there is no particular limitation in concentration of the nitrate solution and concentration of KNO₃ and NaNO₃ forming the nitrate solution. The nitrate solution, as a quenching medium, is advantageous, compared with general quenching oil. Advantages of the nitrate solution are as follows.
- There is no steam membrane process during a nitrate solution quenching process, and a high temperature section cooling speed is very high, and thus, a quenching structure having excellent thick part may be obtained.
- The nitrate solution has a cooling speed close to 0 in case of low temperature section isothermal, and thus, quenching strain is very low.
- A cooling speed of nitrate may be adjusted by adjusting the content of water (which is between fourfold of hot oil cooling speed and oil cooling speed.
- A surface of a part has a stress pressure state, and crack of the part is reduced, and a lifespan of the part is lengthened.
- After quenching, the part has uniform metal gloss and navy color, and after cleaning, it is not required to perform channeling or peening, and corrosion-resistance performance is high.

When isothermal hardening is finished, the hub has tensile strength of 1100 MPa or higher and Rockwell hardness (HRc) of 50 - 55.

### (6) Fine grinding and polishing

The hub of the nodular graphite cast iron of carbide obtained through the heat treatment is fine-ground and polished to have a final shape and required surface quality.

Hereinafter, embodiments of a spline hub according to the present invention will be described.

### Embodiment 1

C : 3.5%, Si : 1.6%, Mn :0.3%, P : 0.01%, S : 0.01%, and Cu : 0.2% by weight ratio, and Fe comprising the remainder were mixed by weight ratio and put into a middle frequency induction furnace, and smelted to obtain a crude liquid (crude liquid molten metal) of nodular graphite cast iron, and it was taken out of the furnace at a temperature of 1503°C.

The crude liquid molten metal of nodular graphite cast iron taken out of the furnace was spheroidized and inoculated, and here, rare earth resource silicon iron magnesium alloy (FeSiMg6RE1) was added as a nodularizer in an amount of 1.0% of the mass of the crude liquid molten metal, and barium silicon iron (FeSi72Ba2) was added as an inoculant in an amount of 0.15% of the mass of the crude liquid molten metal. As a result, it was confirmed that components (wt%) of the molten metal were C : 3.5, Si : 2.2, Mn : 0.3, P : 0.01, S : 0.015, Cu : 0.2, and Mg : 0.045.

The spheroidized and inoculated molten metal was injected into a green sand mold manufactured in advance. Here, a temperature of the molten metal was controlled to 1405°C and the spheroidized and inoculated crude liquid were injected for 7 minutes. The crude liquid was cooled to obtain a nodular cast iron hub containing spheroidal graphite, ferrite, and pearlite.

Thereafter, the nodular cast iron hub was processed to have a hub shape, heated to reach 890°C by using a furnace capable of continuously heating, maintained for 2 hours, and quickly put into a nitrate solution having a temperature of 340°C for 1.5 hours. Thereafter, the nodular cast iron hub was taken out and cooled to reach room temperature to obtain austenite nodular graphite cast iron hub.

Finally, fine grinding and polishing were performed to allow the hub to have required surface roughness.

### Embodiment 2

C: 3.6%, Si: 1.5%, Mn:0.35%, P: 0.007%, S: 0.012%, and Cu: 0.25%, and Fe comprising the remainder were mixed and melted, drawn out at a temperature of 1520°C, to which 1.1% of FeSiMg6RE1 of the mass of the crude liquid molten metal and 0.15% of FeSi72Ba2 of the mass of the crude liquid molten metal were applied. Components (wt%) of the spheroidized and inoculated molten metal were C : 3.6, Si: 2.2, Mn: 0.4, P: 0.007, S: 0.017, Cu: 0.25, and Mg: 0.048.

Thereafter, the molten metal was injected to a green sand mold at a temperature of 1410°C for 7 minutes and subsequently cooled. The obtained hub semi-product was machined and isothermally-hardened. Here, the hub semi-product was heated to reach 910°C, maintained for 2 hours, and put into a nitrate solution having a temperature of 340°C for 1.5 hours. Thereafter, the hub semi-product was cooled to reach room temperature and fine-ground and polished.

### Embodiment 3

C: 3.8%, Si: 1.8%, Mn:0.4%, P: 0.009%, S: 0.009%, and Cu: 0.3% and Fe comprising the remainder were mixed and melted, drawn out at a temperature of 1515°C, to which 1.1% of FeSiMg6RE1 of the mass of the crude liquid molten metal and 0.15% of FeSi72Ba2 of the mass of the crude liquid molten metal were applied. Components (wt%) of the spheroidized and inoculated molten metal were C: 3.8, Si: 2.3, Mn: 0.4, P: 0.01, S: 0.01, Cu: 0.3, and Mg: 0.05.

Thereafter, the molten metal was injected to a green sand mold at a temperature of 1402°C for 7 minutes and subsequently cooled. The obtained hub semi-product was machined and isothermally-hardened. Here, the hub semi-product was heated to reach 920°C, maintained for 2 hours, and put into a nitrate solution having a temperature of 360 °C for 1.5 hours. Thereafter, the hub semi-product was cooled to reach room temperature and fine-ground and polished.

FIG. 1 is a photograph illustrating an internal structure of Embodiment 1. Referring to FIG. 1, it can be seen that Embodiment 1 is comprised of austenite and spheroidal graphite.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A spline hub for a clutch comprising C : 3.4 ∼ 3.9%, Si : 2.1 ∼ 2.5%, Mn : 0.2 ∼ 0.7%, P : 0.01 % or less, S : 0.009 ∼ 0.02%, Cu : 0.2 ∼ 0.4%, and Mg: 0.04 ∼ 0.07% by weight ratio, and the remainder being iron (Fe) and unavoidable impurities, and
having a structure in which spheroidal graphite is precipitated in an austenite matrix structure.

2. The spline hub of claim 1, wherein the structure includes acicular ferrite structure.

3. A method for manufacturing a spline hub for a clutch, the method comprising:
mixing raw materials including C : 3.4 ∼ 4.0%, Si : 1.5 ∼ 1.9%, Mn : 0.5% or less, P : 0.05% or less, S : 0.009 ∼ 0.02%, and Cu : 0.2 ∼ 0.4% by weight ratio and the remainder being iron (Fe) and unavoidable impurities, and smelting the crude liquid molten metal;
applying a nodularizer and an inoculant to the smelted crude liquid molten metal to obtain a molten metal;
injecting the molten metal into a mold to obtain a hub semi-product;
machining the hub semi-product to have a predetermined shape; and
isothermally hardening the machined hub semi-product.

4. The method of claim 3, wherein in the operation of smelting the crude liquid molten metal, the crude liquid molten metal is taken out at a temperature of 1490∼1530 °C.

5. The method of claim 3 or 4, wherein a rare earth source silicon iron magnesium alloy (FeSiMg6RE1) is applied as the nodularizer in an amount of 1.0 ∼ 1.1 % of the mass of the crude liquid molten metal.

6. The method of claim 3, 4, or 5, wherein the isothermally hardening comprises:
heating the hub semi-product to reach a temperature of 890 ∼ 930°C and maintaining the heated hub semi-product for 1.5 ∼ 2.5 hours;
putting the hub semi-product into a liquid having a temperature of 340 ∼ 360 °C and maintaining the hub semi-product in the liquid for 1 ∼ 2 hours; and
cooling the hub semi-product to reach room temperature in the air.

7. The method of claim 6, wherein the liquid is a nitrate solution generated by mixing KNO₃ and NaNO₃ in a mass ratio of 1:1.

8. The method of claim 5, wherein components of the molten metal with the nodularizer and the inoculant injected therein comprise C : 3.4 ∼ 3.9%, Si : 2.1 ∼ 2.5%, Mn : 0.2 ∼ 0.7%, P : 0.1% or less, S : 0.05% or less, Cu : 0.2 ∼ 0.4%, and Mg : 0.04 ∼ 0.07% by weight ratio, and the remainder being Fe and unavoidable impurities.

9. The method of any one of claims 3 to 8, further comprising:
grinding the isothermally hardened hub semi-product to have a final shape.
